# EUROPEAN PATENT SPECIFICATION

(11) **EP 2 769 861 B1**
(45) Date of publication and mention of the grant of the patent: **17.07.2019**
(21) Application number: 13827457.6
(22) Date of filing: 09.08.2013
(51) Int. Cl.: B60H 3/00, B60H 1/22, B60H 1/32, B60H 1/00

(54) **AIR CONDITIONER FOR ELECTRIC VEHICLE**
KLIMAANLAGE FÜR EIN ELEKTROFAHRZEUG
APPAREIL DE CONDITIONNEMENT D'AIR POUR VÉHICULE ÉLECTRIQUE

(30) Priority: 10.08.2012 KR 20120087892
(43) Date of publication of application: 27.08.2014
(73) Proprietor: LG Electronics Inc., Yeongdeungpo-gu Seoul 150-721 (KR)
(72) Inventor: WON, You Sung, Incheon 403-900 (KR)
(74) Representative: Vossius & Partner Patentanwälte Rechtsanwälte mbB
(86) International application number: PCT/KR2013/007193
(87) International publication number: WO 2014/025226

(56) References cited:
- EP-A2- 2 497 662
- JP-A- 2003 291 625
- JP-A- 2004 205 172
- KR-A- 20040 093 632
- KR-A- 20120 071 018
- US-A1- 2011 167 850
- US-A1- 2012 117 993

## Description

### [Technical Field]

The present invention relates to an air conditioner for an electric vehicle, and more particularly to an air conditioner of an electric vehicle, to which an air conditioner exhibiting low power consumption is applied.

### [Background Art]

Vehicle is a transportation means for transporting passengers or goods on roads through transmission of drive power generated from an engine of the transportation means to wheels of the transportation means. Such a vehicle may mainly include a body defining an appearance of the vehicle, and a chassis, to which various devices are organically connected. The chassis not only includes a vehicle engine functioning as motive power, but also includes essential devices such as a power transmission, a steering device, a suspension, and a braking device.

Engine is a motive to enable a vehicle to run. Most vehicle engines are 4-stroke internal combustion engines. Such a 4-stroke internal combustion engine is an internal combustion engine completing one cycle through suction, compression, explosion, and exhaustion, and is a most general example of a reciprocating engine. In an internal combustion engine, which mainly uses volatile fuel, the fuel is compressed in a state of being mixed well with atmospheric oxygen, for complete combustion, and is then burnt and, as such, kinetic energy is obtained through direct utilization of thermal energy generated during combustion of the fuel.

Such an internal engine, which uses volatile fuel, causes environmental pollution due to generation of exhaust gas, and exhausts petroleum resources. As a substitute, a vehicle using electricity as motive power thereof has been proposed.

An electric vehicle (EV) is a vehicle in which motive power is obtained through driving of an AC or DC motor mainly using electric power from a battery. EVs are classified into a battery vehicle and a hybrid vehicle. In the battery vehicle, a motor is driven, using electric power from a battery. When electric power of the battery is completely discharged, the battery is recharged. In the hybrid vehicle, electricity is generated through driving of an engine, to charge a battery. Using the charged electricity, an electric motor is driven, to move the vehicle.

Hybrid vehicles may be classified into a series type hybrid vehicle and a parallel type hybrid vehicle. In the series type hybrid vehicle, mechanical energy output from an engine is converted through a generator into electric energy which is, in turn, supplied to a battery or a motor. The vehicle of this type is a vehicle always driven by a motor. The concept of this vehicle is addition of an engine and a generator to an existing vehicle so as to increase range of the vehicle. In the parallel type hybrid vehicle, two power sources are used such that the vehicle is driven, not only through an engine (gasoline or diesel), but also using electric power from a battery. In the parallel type hybrid vehicle, both the engine and the motor may be simultaneously driven to drive the vehicle in accordance with traveling conditions.

In the EV driven by battery power, it is most important to minimize consumption of battery power. Meanwhile, such an EV employs an air conditioner including a heater mounted in front of an evaporator of the vehicle, to direct heat air during heating, as in general internal combustion engine vehicles. However, such a system heating indoor air by a heater has a problem in that consumption of electric power is very high.

Furthermore, there is a problem in that range of the EV is reduced due to use of the air conditioner exhibiting high power consumption.

Document US 2011/0167850 A1 discloses an air conditioner of an electric vehicle comprising: a compressor 21 for compressing refrigerant; an indoor heat exchanger 14 for performing heat exchange between refrigerant introduced into the indoor exchanger after emerging from the compressor and air; an outdoor heat exchanger 22 for performing heat exchange between refrigerant introduced into the outdoor heat exchanger and outdoor air; a first expansion device 23 arranged between the indoor heat exchanger and the outdoor heat exchanger, to expand refrigerant introduced into the first expansion device; an evaporator 13 for evaporating refrigerant introduced into the evaporator, to dehumidify indoor air; a second expansion device 24 arranged between the outdoor heat exchanger and the evaporator, to expand refrigerant introduced into the second expansion device; a first bypass line 30 connected to guide refrigerant emerging from the indoor heat exchanger 14 to flow toward the evaporator after bypassing the first expansion device and the outdoor heat exchanger, and a second bypass line 28 connected to guide refrigerant flowing toward the evaporator to flow toward the compressor after bypassing the evaporator, wherein, during a heating operation, the first bypass line 30 is selectively used in accordance with an outdoor temperature, and the second bypass 28 line is selectively used in accordance with an indoor humidity.

### [Disclosure]

### [Technical Problem]

It is an object of the present invention to provide an air conditioner of an electric vehicle which exhibits low power consumption.

The objects of the present invention are not limited to the above-described objects, and other objects not described herein will be more clearly understood by those skilled in the art from the following description.

### [Technical Solution]

In accordance with an aspect of the present invention, the above and other objects can be accomplished by the provision of an air conditioner of an electric vehicle according to claim 1, including a compressor for compressing refrigerant, an indoor heat exchanger for performing heat exchange between refrigerant introduced into the indoor exchanger after emerging from the compressor and air, an outdoor heat exchanger for performing heat exchange between refrigerant introduced into the outdoor heat exchanger and outdoor air, a first expansion device arranged between the indoor heat exchanger and the outdoor heat exchanger, to expand refrigerant introduced into the first expansion device, an evaporator for evaporating refrigerant introduced into the evaporator, to dehumidify indoor air, a second expansion device arranged between the outdoor heat exchanger and the evaporator, to expand refrigerant introduced into the second expansion device, a first bypass line connected to guide refrigerant emerging from the indoor heat exchanger to flow toward the evaporator after bypassing the first expansion device and the outdoor heat exchanger, and a second bypass line connected to guide refrigerant flowing toward the evaporator to flow toward the compressor after bypassing the evaporator, wherein, during a heating operation, the first bypass line is selectively used in accordance with an outdoor temperature, and the second bypass line is selectively used in accordance with an indoor humidity.

The air conditioner further includes a first switch valve for performing a switching operation to allow refrigerant flowing toward the first expansion device to flow toward the first bypass line in a low-temperature heating mode, and a second switch valve for performing a switching operation to allow refrigerant flowing toward the evaporator to flow toward the second bypass line in a non-dehumidification mode.

The air conditioner further includes an air introduction blocking member for preventing air having exchanged heat with the indoor heat exchanger from being introduced into a passenger compartment in a low-temperature dehumidification heating mode, and a check valve for preventing refrigerant flowing toward the first bypass line from flowing toward the outdoor heat exchanger.

In accordance with another aspect of the present invention, there is provided a method for controlling the air conditioner of the electric vehicle according to claim 4, including, in a dehumidification heating mode, switching the first switch valve to allow refrigerant emerging from the indoor heat exchanger to flow toward the outdoor heat exchanger, switching the second switch valve to allow refrigerant emerging from the outdoor heat exchanger to flow toward the evaporator, and turning off the first expansion device while turning on the second expansion device.

The method may further include, in the dehumidification heating mode, opening the check valve while opening the air introduction blocking member, and turning off the heater.

The method may further include, in a non-dehumidification heating mode, switching the first switch valve to allow refrigerant emerging from the indoor heat exchanger to flow toward the outdoor heat exchanger, switching the second switch valve to allow refrigerant emerging from the outdoor heat exchanger to flow toward the second bypass line, and turning on the first expansion device while turning off the second expansion device.

The method may further include, in the non-dehumidification heating mode, opening the check valve while opening the air introduction blocking member, and turning off the heater.

The invention further includes, in a low-temperature heating mode, switching the first switch valve to allow refrigerant emerging from the indoor heat exchanger to flow toward the second switch valve without passing through the outdoor heat exchanger, switching the second switch valve to allow refrigerant emerging from the first switch valve to flow toward the evaporator, and turning on the second expansion device.

The method may further include, in the low-temperature dehumidification heating mode, closing the check valve while opening the air introduction blocking member, and turning on the heater.

In another aspect of the present invention, there is provided a method for controlling the air conditioner of the electric vehicle including, in a dehumidification cooling mode, switching the first switch valve to allow refrigerant emerging from the indoor heat exchanger to flow toward the outdoor heat exchanger, switching the second switch valve to allow refrigerant emerging from the second switch valve to flow toward the evaporator, opening the check valve while closing the air introduction blocking member, and turning off the first expansion device while turning on the second expansion device.

Detailed matters of other embodiments are included in the detailed description and the drawings.

### [Advantageous Effects]

In accordance with the air conditioner of the electric vehicle of the present invention, there are one or more effects as follows.

First, there is an advantage in that power consumption is low when air in the passenger compartment is cooled/heated.

Second, there is an advantage in that range of the electric vehicle is increased in accordance with low power consumption.

Third, there is an advantage in that defrosting operation is not required because, during heating operation, primary heating is carried out under the condition that refrigerant is controlled in pressure and temperature to avoid formation of frost on the evaporator, and shortage of heat is supplemented by the heater.

Fourth, there is an advantage in that the air conditioner can operate in various operation modes in accordance with an outdoor temperature or indoor humidity.

Effects of the present invention are not limited to the above-described effects. Other effects not described can be clearly understood by those skilled in the art from the description of the claims.

### [Description of Drawings]

The above and other objects, features and other advantages of the present invention will be more clearly understood from the following detailed description taken in conjunction with the accompanying drawings, in which:
FIG. 1 is a view schematically illustrating a body of an electric vehicle according to an embodiment of the present invention;
FIG. 2 is a perspective view schematically illustrating parts of an air conditioner of the electric vehicle according to the embodiment of the present invention;
FIG. 3 is an exploded perspective view schematically illustrating the air conditioner of the electric vehicle according to the embodiment of the present invention;
FIG. 4 is a view schematically illustrating a flow of refrigerant during dehumidification cooling operation of the air conditioner of the electric vehicle according to the embodiment of the present invention;
FIG. 5 is a view schematically illustrating a flow of refrigerant during non-dehumidification heating operation of the air conditioner of the electric vehicle according to the embodiment of the present invention;
FIG. 6 is a view schematically illustrating a flow of refrigerant during dehumidification heating operation of the air conditioner of the electric vehicle according to the embodiment of the present invention; and
FIG. 7 is a view schematically illustrating a flow of refrigerant during low-temperature heating operation of the air conditioner of the electric vehicle according to the embodiment of the present invention.

### [Best Mode]

Referring to embodiments of the present invention described hereinafter in detail with reference to the accompanying drawings, advantages and features of the present invention and methods for accomplishing the same will be clarified. The present invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

Hereinafter, the present invention will be described with reference to the drawings for explaining an air conditioner 100 of an electric vehicle according to embodiments of the present invention.

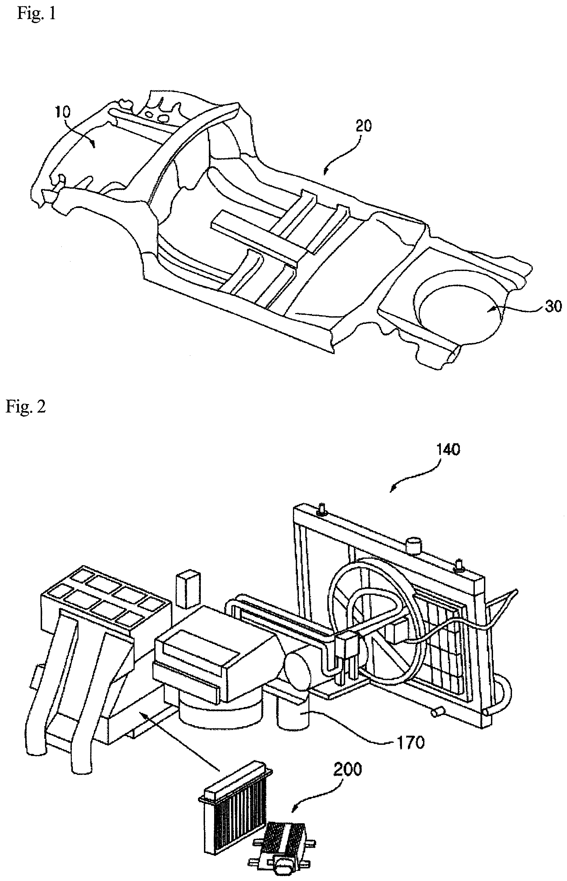

FIG. 1 is a view schematically illustrating a body of an electric vehicle according to an embodiment of the present invention.

Referring to FIG. 1, the vehicle according to the embodiment of the present invention includes a front body 10, a central body 20, and a rear body 30.

The body defines an enclosed space in which various devices are arranged, and passengers or goods are received. It may be necessary for the body to have a structure capable of opening or closing a portion of the enclosed space in order to allow access of passengers or goods to the space, and easy maintenance and repair of the devices. In addition, the body has an important function to protect passengers, goods and the devices from external rain, wind, dust, etc. The body is an exterior and, as such, the shape of the body defines the shape of the vehicle.

The front body 10, on which elements of a power source and a power transmission system are mounted, forms a "#" shape and is provided with the power source and a transmission. Installed at the front body 10 are a steering device for adjusting a rotation axis direction of front wheels in order to change an advance direction of the vehicle 1, a front wheel suspension for preventing vibrations from a road from being directly transferred to the body, and an air conditioner for cooling, heating and dehumidifying a passenger compartment of the vehicle.

In addition to mounting of heavy elements such as the power source, transmission, and various auxiliary mechanisms, the front body 10 should support the front wheels of the front wheel suspension. When the vehicle is front-wheel drive, the front body 10 also bears driving force.

Upon receiving strong impact due to an accident, the front body 10 is damaged by absorbing the impact and, as such, strong force is not transferred to the passenger compartment. The elements installed at the front body 10 are fastened to the front body 10 by bolts and nuts or are welded to the front body 10. Only the exterior elements such as front fenders and a hood are separable.

The central body 20, in which passengers sit, includes a front floor panel to form a floor of a front passenger compartment, a tunnel provided at a central portion of the front floor panel, and side sill panels provided at opposite side edges of the front floor panel, to form floor side surfaces, respectively.

Since the central body 20 mainly forms the passenger compartment of the vehicle, namely, forms a space, in which passengers sit, the inner space of the central body 20 is designed to be as large as possible. Doors are mounted to lateral sides of the central body 20 in order to prevent external rain, wind, etc. from entering the inner space of the central body 20. The front floor panel forms a floor of the passenger compartment and, as such, is a panel having high strength and a large area. The side sill panels, which form pillar bases, are connected to left and light sides of the front floor panel throughout the length of the front floor panel, respectively. The tunnel is arranged at the central portion of the front floor.

The rear body 30, on which a spare tire and other articles are stored, includes a rear floor panel to form a floor of the rear body 30. The rear body 30 is provided with a rear wheel suspension to prevent vibrations from a road from being directly transferred to the body. It is necessary for the rear body 30 to support rear wheels of the rear wheel suspension. When the vehicle is of a rear-wheel drive type, the rear body 30 also bears driving force. The rear body 30 is provided with a rear bumper to absorb impact upon rear collision.

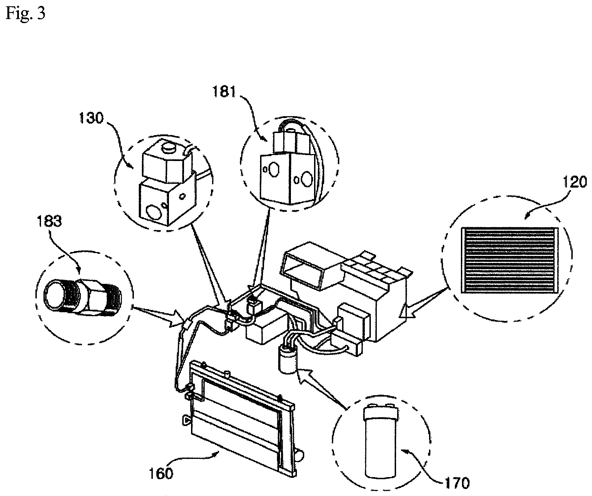

FIG. 2 is a perspective view schematically illustrating parts of an air conditioner of the electric vehicle according to the embodiment of the present invention. FIG. 3 is an exploded perspective view schematically illustrating the air conditioner of the electric vehicle according to the embodiment of the present invention.

Referring to FIGS. 2 and 3, the air conditioner of the electric vehicle according to the embodiment of the present invention includes a compressor 110, an indoor heat exchanger 120, a first expansion device 130, an outdoor heat exchanger 140, an evaporator 160, a second expansion device 161, a first switch valve 181, a second switch valve 182, a check valve 183, a supercooler 150, an accumulator 170, and a heater 200. The above-described elements, except for the heater 200, are connected by lines, through which refrigerant flows.

The second expansion device 161 may be integrated with the evaporator 160.

Thus, the air conditioner of the electric vehicle includes a first connection line 193 to connect the compressor 110 and indoor heat exchanger 120, a second connection line 194 to connect the indoor heat exchanger 120 and first expansion device 130, a third connection line 195 to connect the first expansion device 130 and outdoor heat exchanger 140, a fourth connection line 196 to connect the outdoor heat exchanger 140 and evaporator 160, a fifth connection line 197 to connect the evaporator 160 and accumulator 170, and a sixth connection line 198 to connect the fifth connection line 197 and accumulator 170.

The compressor 110 compresses low-temperature and low-pressure refrigerant introduced thereinto into high-temperature and high-pressure refrigerant. Various structures may be applied to the compressor 110. The compressor 110 may be of an inverter type or a constant speed type. The compressor 110 may be connected to the accumulator 170 in order to prevent liquid refrigerant from entering the compressor 110. As the compressor 110, a multi-stage compressor may be used. An oil separator (not shown) may be installed at a discharge line of the compressor 110 in order to collect oil contained in refrigerant discharged from the compressor 110.

The indoor heat exchanger 120 condenses high-temperature and high-pressure refrigerant introduced thereinto into low-temperature and low-pressure refrigerant. Upon condensing refrigerant, the indoor heat exchanger 120 discharges the heat.

The indoor heat exchanger 120 is arranged at an air line 300, through which indoor air flows. In detail, the inner heat exchanger 120 is arranged at an indoor air discharge side of the air line 300. Accordingly, the inner heat exchanger 120 discharges heat to indoor air during heating operation thereof and, as such, heats indoor air.

The air conditioner 100 of the electric vehicle may further include an air introduction blocking member 121 arranged at the air line 300, to prevent air having exchanged heat with the indoor heat exchanger 120 from being introduced into the passenger compartment. The air introduction blocking member 121 prevents heat of the indoor heat exchanger 120 from being introduced into the passenger compartment of the vehicle during cooling operation of the air conditioner 100 of the electric vehicle. A damper is an example of the air introduction blocking member 121. Of course, the present invention is not limited to the above-described example.

The compressor 110 and indoor heat exchanger 120 are connected by the first connection line, through which refrigerant flows. High-temperature and high-pressure refrigerant discharged from the compressor 110 flows through the first connection line 193 and, as such, the first connection line 193 is preferably made of a material exhibiting excellent heat resistance and corrosion resistance.

The first expansion device 130 is arranged between the indoor heat exchanger 120 and the outdoor heat exchanger 140, to expand refrigerant introduced thereinto. Accordingly, the first expansion device 130 throttles refrigerant emerging from the indoor heat exchanger 120. The first expansion device 130 may be constituted by an electronic expansion valve or an orifice valve. The orifice valve is a constant pressure expansion valve used to reduce pressure of refrigerant through a throttling function.

The first expansion device 130 and indoor heat exchanger 120 are connected by the second connection line 194. The first switch valve 181 is arranged at the second connection line 194. A first bypass line 191 is connected to guide refrigerant emerging from the indoor heat exchanger 120 to flow toward the evaporator 160 after bypassing the first expansion device 130 and outdoor heat exchanger 140. The first bypass line 191 is connected to the second connection line 194 via the first switch valve 181. That is, the first bypass line 191 is connected to the first switch valve 181.

The first switch valve 181 connects the indoor heat exchanger 120, first expansion device 130, and first bypass line 191. Thus, the first switch valve 181 carries out a switching operation to allow refrigerant flowing toward the first expansion device 130 to flow through the first bypass line 191 in a low-temperature heating mode.

A switch valve is a direction change valve for switching a flow direction of a fluid. Generally, such a switch valve includes a two-way valve, a three-way valve, a four-way valve, etc. In the present invention, the first switch valve 191 is preferably constituted by a three-way valve so as to connect the indoor heat exchanger 120, first expansion device 130, and first bypass line 191.

The outdoor heat exchanger 140 performs heat exchange between refrigerant introduced into the outdoor heat exchanger 140 and outdoor air. Accordingly, the outdoor heat exchanger 140 functions as a condenser during cooling operation, and functions as an evaporator during heating operation. The outdoor heat exchanger 140 is connected with the first expansion device 130 via the third connection line 195. The outdoor heat exchanger 140 is also connected to the evaporator 160 via the fourth connection line 196.

The fourth connection line 196 is connected to the first bypass line 191. The check valve is arranged at the fourth connection line 196. The check valve prevents refrigerant flowing through the first bypass line 191 from flowing toward the outdoor heat exchanger 140 during a low-temperature heating mode. The second switch valve 182 and evaporator 160 are arranged at the fourth connection line 196.

The second bypass line 192 is connected to guide refrigerant flowing toward the evaporator 192 to flow toward the compressor 110 after bypassing the evaporator 160. Thus, the second bypass line 192 is a line, through which refrigerant flows during non-dehumidification operation. The second bypass line 192 is connected to the fourth connection line 196 via the second switch valve 182. That is, the second bypass line 192 is connected to the second switch valve 182.

The second switch valve connects the supercooler 150, fourth connection line 196, and second bypass line. Accordingly, the second switch valve performs a switching operation to allow refrigerant flowing toward the evaporator 160 to flow through the second bypass line 192. The second switch valve 182 is preferably constituted by a three-way valve because it connects the supercooler 150, fourth connection line 196, and second bypass line 192.

The supercooler 150 performs heat exchange between refrigerant flowing between the evaporator 160 and the outdoor heat exchanger 140 and refrigerant flowing between the accumulator 170 and the compressor 110. That is, the supercooler 150 performs heat exchange between refrigerant flowing through the fourth connection line 196 and refrigerant flowing through a sixth connection line 198, which will be described later.

A heat exchanger such as the above-described outdoor heat exchanger 140 or supercooler 150 is a device for transferring heat from a high-temperature medium to a low-temperature medium. Generally, such a heat exchanger is used in a heater, a cooler, an evaporator, a condenser, etc. A heat transfer medium used to transfer heat to a target fluid is referred to as a "heat medium". On the other hand, a medium used to absorb heat from a target fluid is referred to as "refrigerant". In the present embodiment, R-134a or 1234yf is preferably used as a refrigerant.

The evaporator 160 evaporates refrigerant, to dehumidify and cooling indoor air. The evaporator 160 is arranged at the air line 300, as will be described later. In detail, the evaporator 160 is arranged at an indoor air introduction side of the air line 300. Accordingly, the evaporator 160 absorbs heat from air flowing through the air line 300, to condense moisture contained in the air. That is, the evaporator 160 means a device for absorbing heat from the surroundings when a liquid is changed into gas through evaporation, and rapidly lowering the temperature of the surroundings.

The second expansion device 161 is arranged between the outdoor heat exchanger 140 and the evaporator 160, to expand refrigerant introduced into the second expansion device 161. Accordingly, the second expansion device 161 throttles refrigerant emerging from the outdoor heat exchanger 140. The second expansion device 161 may be constituted by an electronic expansion valve or an orifice valve. The orifice valve is a constant pressure expansion valve used to reduce pressure of refrigerant through a throttling function.

The accumulator 170 is connected to the compressor 110, and receives refrigerant. The accumulator 170 receives refrigerant discharged from the compressor 110 during indoor cooling operation. During heating operation, the accumulator 170 receives refrigerant emerging from the evaporator 160 or refrigerant introduced thereto via the second bypass line 192.

The accumulator 170 is a device for performing a moisture separation function in order to supply only the gas-phase refrigerant to the compressor 110. Preferably, the accumulator 170 is arranged at a suction side of the compressor 110.

The heater 200 is arranged at the air line 300 in the vicinity of the indoor heat exchanger 120. The heater 200 is connected to the indoor heat exchanger 120, to discharge heat into indoor air. Accordingly, the heater 200 functions to heat indoor air, as an assistant of the indoor heat exchanger 120, when the temperature of the indoor air is very low.

Preferably, the heater 200 is a PTC heater. PCT is barium titanate-based ceramic, and is a semiconductor exhibiting a rapid increase in electric resistance in response to an increase in temperature. Such PCT is a safe heating element substituting for nicrome wires. Such an element is used in an air conditioner, a hair drier, a clothes drying machine, etc. because it exhibits variation in resistance in accordance with variation in temperature and, as such, functions as a switch.

The air line 300 is a line, through which indoor air flows. The evaporator 160, indoor heat exchanger 120, and heater 200 are arranged at the air line 300. The evaporator 160 may be arranged at the indoor air introduction side of the air line 300, whereas the indoor heat exchanger 120 and heater 200 may be arranged at the indoor air discharge side of the air line 300. Thus, indoor air may be cooled or heated after being dehumidified.

In the air conditioner 100 of the electric vehicle according to the embodiment of the present invention, each of the first expansion device 130, first switch valve 181 and second switch valve 182 is preferably constituted by an electrically controllable valve. Accordingly, the first expansion device 130, first switch valve 181 and second switch valve 182 operate, as described in the following Table 1. In this case, the first expansion device 130 may be implemented by an electronic expansion valve.

**[TABLE 1]**

| Classification | First Switch Valve | First Expansion Device | Second Switch Valve |
|---|---|---|---|
| Dehumidification Cooling Operation | OFF | OFF | OFF |
| Non-dehumidification Heating Operation | OFF | ON | ON |
| Dehumidification Heating Operation | OFF | OFF | OFF |
| Low-temperature Heating Operation | ON | OFF | OFF |

Of course, in another embodiment of the present invention, the air conditioner 100 of the electric vehicle may be constituted by excluding the supercooler 150 and accumulator 170 from the configuration of the air conditioner 100 of the electric vehicle according to the above-described former embodiment of the present invention. Accordingly, in the latter embodiment of the present invention may exclude the fifth connection line 197 and sixth connection line 198 from the air conditioner 100 of the electric vehicle according to the former embodiment of the present invention, and may include a seventh connection line, to which the evaporator 160 and compressor 110 are connected.

Hereinafter, functions of the air conditioner of the electric vehicle according to the present invention constituted as described above will be described.

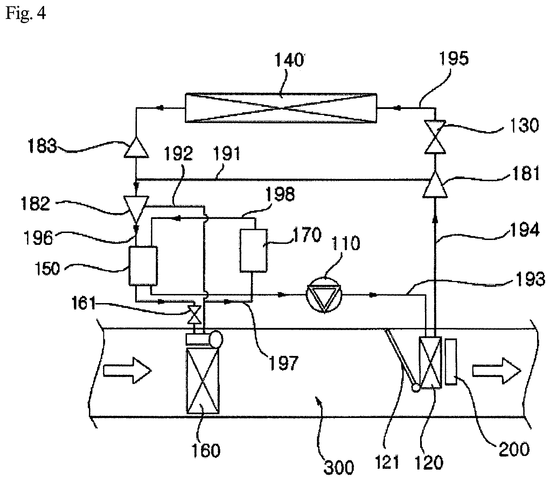

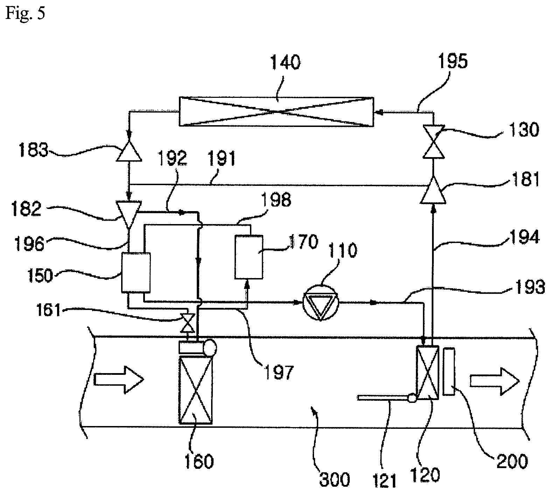

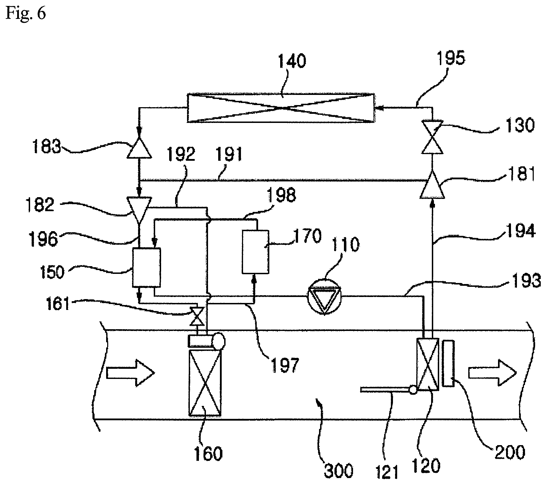

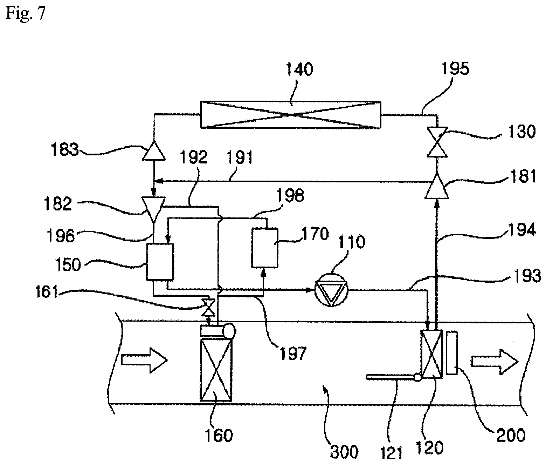

FIG. 4 is a view schematically illustrating a flow of refrigerant during dehumidification cooling operation of the air conditioner of the electric vehicle according to the embodiment of the present invention. FIG. 5 is a view schematically illustrating a flow of refrigerant during non-dehumidification heating operation of the air conditioner of the electric vehicle according to the embodiment of the present invention. FIG. 6 is a view schematically illustrating a flow of refrigerant during dehumidification heating operation of the air conditioner of the electric vehicle according to the embodiment of the present invention. FIG. 7 is a view schematically illustrating a flow of refrigerant during low-temperature heating operation of the air conditioner of the electric vehicle according to the embodiment of the present invention.

Hereinafter, functions of the air conditioner of the electric vehicle according to the embodiment of the present invention will be described with reference to FIGS. 4 to 7.

Operation of the air conditioner of the electric vehicle according to the embodiment of the present invention is classified into cooling operation and heating operation. The cooling operation is also classified into dehumidification heating operation, non-dehumidification heating operation, and low-temperature heating operation.

Non-dehumidification operation may be defined by cooling operation or heating operation.

The air conditioner of the electric vehicle according to the embodiment of the present invention may operate in one of a dehumidification heating mode, non-dehumidification heating mode and a low-temperature heating mode. The air conditioner may operate in one of the above-described operation modes in accordance with an indoor temperature or indoor humidity.

For example, during heating operation, the first switch valve 181 may be switched to selectively use the first bypass line in accordance with an outdoor temperature, and the second switch valve 182 may be switched to selectively use the second bypass line in accordance with indoor humidity.

The cycle of the air conditioner of the electric vehicle according to each operation is classified, as in the following Table 2.

**[TABLE 2]**

| Classification | Refrigerant Flow | | | | |
|---|---|---|---|---|---|
| | Compressor | Indoor Heat Exchanger | First Expansion Device | Outdoor Heat Exchanger | Evaporator |
| Dehumidification Cooling Operation | Comp. | Cond. | Pass | Cond. | Evap. |
| Indoor Non-dehumidification Heating Operation | Comp. | Cond. | Exp. | Exp. | - |
| Indoor Dehumidification Heating Operation | Comp. | Cond. | Pass | Cond. | Evap. |
| Indoor Low-temperature Heating Operation | Comp. | Cond. | - | - | Evap. |

| | | | | | |
|---|---|---|---|---|---|
| Comp.: Compression, Cond.: Condensation, Exp.: Expansion, Evap.: Evaporation | | | | | |

First, dehumidification cooling operation will be described with reference to FIG. 4. During dehumidification cooling operation, the compressor 110 compresses refrigerant. Accordingly, the refrigerant is changed into a high-temperature and high-pressure state.

The compressed refrigerant flows toward the indoor heat exchanger 120 along the first connection line 193. In this case, heat is discharged. In this case, the air introduction blocking member 121 is closed, to prevent air heated in the indoor heat exchanger 120 from being introduced into the passenger compartment. High-temperature and high-pressure refrigerant emerging from the indoor heat exchanger 120 flows through the first expansion device 130 via the first switch valve 181 along the second connection line 194. In this case, the first expansion device 130 is in an OFF state and, as such, the refrigerant is introduced into the outdoor heat exchanger 140 after passing through the third connection line 195 without phase change thereof.

Here, the OFF state of the first expansion device 130 means that refrigerant passes through the first expansion device 130 without being expanded.

The refrigerant in the outdoor heat exchanger 140 discharges heat and, as such, is phase-changed into low-temperature and high-pressure liquid refrigerant. The liquid refrigerant flows through the second switch valve 182 after passing through the check valve 183, and is then introduced into the supercooler 150 along the fourth connection line 196. In this case, the temperature of the refrigerant is lowered, through heat exchange, below the temperature lowered by the outdoor heat exchanger. This is because the refrigerant exchanges heat with chill refrigerant emerging from the evaporator 160.

The liquid-phase refrigerant is expanded in the second expansion device 161 after passing through the supercooler 150, and is then supplied to the evaporator 160. The refrigerant is subjected to phase change and, as such, the temperature of the refrigerant is lowered. The refrigerant exchanges heat with air in the air line 300. The air flowing through the air line 300 is cooled, and is then discharged into the passenger compartment of the vehicle.

Gas-phase chill refrigerant emerging from the evaporator 160 flows through the accumulator 170 after passing through the fifth connection line 197. In this case, liquid-phase refrigerant, which has not been phase-changed, is separated without passing through the accumulator 170. The gas-phase chill refrigerant again passes through the supercooler 150 after passing through the sixth connection line 198. In this case, the refrigerant exchanges heat with the low-temperature and high-pressure refrigerant emerging from the second switch valve 182 and, as such, is changed into a refrigerant state having a lowered temperature. The resultant refrigerant is supplied to the evaporator 160, and is then changed into a gas state having increased density while absorbing heat through heat exchange.

The gas-phase refrigerant is introduced into the compressor 110 after passing through the supercooler 150, and is then circulated in the above-described manner.

Non-dehumidification heating operation will be described with reference to FIG. 5. During non-dehumidification heating operation, the compressor 110 compresses refrigerant. Accordingly, the refrigerant is changed into a high-temperature and high-pressure state.

The compressed refrigerant flows toward the indoor heat exchanger 120. The refrigerant introduced into the indoor heat exchanger 120 is condensed. In accordance with condensation of the refrigerant, heat of the refrigerant is discharged into indoor air. Accordingly, the temperature of the refrigerant is lowered, whereas the temperature of the indoor air is raised. Thus, heating effects are generated. In this case, the air introduction blocking member 121 is in an opened state.

The condensed refrigerant flows toward the first switch valve 181 via the second connection line 194. The first switch valve 181 performs a switching operation to allow refrigerant emerging from the indoor heat exchanger 120 to flow through the first expansion device 130 and outdoor heat exchanger 140.

The first expansion device 130 is turned on. In an ON state of the first expansion device 130, refrigerant introduced into the first expansion device 130 is expanded and, as such, the temperature and pressure of the expanded refrigerant are lowered. The opening degree of the first expansion device 130 is adjustable.

Refrigerant emerging from the first expansion device 130 flows toward the outdoor heat exchanger 140 via the third connection line 195. The refrigerant introduced into the outdoor heat exchanger 140 exchanges heat with outdoor air. The refrigerant in the outdoor heat exchanger 140 is evaporated and, as such, absorbs heat from outdoor air. Accordingly, the temperature of the refrigerant is raised.

Refrigerant emerging from the outdoor heat exchanger 140 is changed in flow direction by the second switch valve 182, to be bypassed toward the accumulator 170 via the second bypass line 192. As a result, indoor air is not dehumidified. From the refrigerant introduced into the accumulator 170, liquid-phase refrigerant is separated and, as such, only gas-phase refrigerant flows toward the compressor 110.

Dehumidification heating operation will be described with reference to FIG. 6. Dehumidification heating operation is similar to non-dehumidification heating operation and, as such, will be described mainly in conjunction with differences thereof from the non-dehumidification heating operation.

The compressor 110 compresses refrigerant. Accordingly, the refrigerant is changed into a high-temperature and high-pressure state.

The compressed refrigerant flows toward the indoor heat exchanger 120. The refrigerant introduced into the indoor heat exchanger 120 is primarily condensed. In accordance with condensation of the refrigerant, heat of the refrigerant is discharged into indoor air. Accordingly, the temperature of the refrigerant is lowered, whereas the temperature of the indoor air is raised. Thus, heating effects are generated. In this case, the air introduction blocking member 121 is in an opened state.

The refrigerant flows toward the first switch valve 181 via the second connection line 194. The first switch valve 181 performs a switching operation to allow refrigerant emerging from the indoor heat exchanger 120 to flow through the first expansion device 130 and outdoor heat exchanger 140.

The first expansion device 130 is turned off. Accordingly, refrigerant introduced into the first expansion device 130 passes through the first expansion device 130 without being expanded.

Refrigerant emerging from the first expansion device 130 flows toward the outdoor heat exchanger 140 via the third connection line 195. The refrigerant introduced into the outdoor heat exchanger 140 exchanges heat with outdoor air. The refrigerant in the outdoor heat exchanger 140 is secondarily condensed and, as such, discharges heat into outdoor air. Accordingly, the temperature of the refrigerant is lowered.

Refrigerant emerging from the outdoor heat exchanger 140 is introduced into the second switch valve 182. The second switch valve 182 is switched to allow refrigerant introduced thereinto to flow toward the evaporator 160.

Refrigerant emerging from the second switch valve 182 flows toward the evaporator 160 via the fourth connection line 196. The refrigerant flowing toward the evaporator 160 exchanges heat with refrigerant flowing along the sixth connection line 198, through the supercooler 150 arranged at the fourth connection line 196.

The second expansion device is turned on. Accordingly, the refrigerant flowing toward the evaporator 160 is introduced into the evaporator 160 after being expanded in the second expansion device 161. As a result, the refrigerant flowing toward the evaporator 160 is lowered in pressure and temperature.

The refrigerant introduced into the evaporator 160 is evaporated and, as such, absorbs heat from indoor air. Accordingly, indoor air may be humidified. Since the refrigerant absorbs heat from indoor air, the temperature of the refrigerant is raised. Refrigerant emerging from the evaporator 160 flows toward the accumulator 170. Refrigerant introduced into the accumulator 170 flows toward the compressor 110.

Low-temperature dehumidification heating operation will be described with reference to FIG. 7.

The compressor 110 compresses refrigerant. Accordingly, the refrigerant is changed into a high-temperature and high-pressure state.

The compressed refrigerant flows toward the indoor heat exchanger 120. The refrigerant introduced into the indoor heat exchanger 120 is condensed. In accordance with condensation of the refrigerant, heat of the refrigerant is discharged into indoor air. Accordingly, the temperature of the refrigerant is lowered, whereas the temperature of the indoor air is raised. Thus, heating effects are generated. In this case, the air introduction blocking member 121 is in an opened state.

In addition, the heat 200 may operate to supplement shortage of heat.

Refrigerant emerging from the indoor heat exchanger 120 is changed in flow direction by the first switch valve 181, to be bypassed toward the second switch valve 182 via the first bypass line 191.

The second switch valve 182 is switched to allow refrigerant emerging from the second switch valve 182 to flow toward the evaporator 160.

Refrigerant flowing toward the evaporator 160 by the first bypass line 191 flows toward the evaporator 160 via the fourth connection line 196. The refrigerant flowing toward the evaporator 160 exchanges heat with refrigerant flowing along the sixth connection line 198, through the supercooler 150 arranged at the fourth connection line 196. Accordingly, the refrigerant flowing toward the evaporator 160 is lowered in temperature while discharging heat.

Refrigerant emerging from the supercooler 150 is expanded in the second expansion device 161, and is then supplied to the evaporator 160. Refrigerant introduced into the evaporator 160 is evaporated and, as such, absorbs heat from indoor air. Thus, indoor air may be dehumidified. In addition, the temperature of the refrigerant is raised in accordance with absorption of heat from indoor air.

Refrigerant emerging from the evaporator 160 flows toward the accumulator 170. Refrigerant introduced into the accumulator 170 flows toward the compressor 110.

In accordance with an embodiment, when defrosting conditions are generated in the dehumidification heating mode, the dehumidification heating mode may be switched to the low-temperature dehumidification heating mode.

That is, when the evaporator 160 is at a very low temperature, frost or the like may be formed on the evaporator 160 and, as such, the air conditioner exhibits degraded efficiency. In this case, when the temperature of refrigerant in the evaporator 160 is raised through adjustment of the pressure of the refrigerant, the evaporator 160 is defrosted because degree of heat exchange in the indoor heat exchanger 120 is reduced. Shortage of heat is supplemented by the heater 200. Thus, there is an advantage in that separate defrosting operation is not required because the evaporator 160 operates at a raised temperature.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An air conditioner of an electric vehicle comprising:
a compressor (110) for compressing refrigerant;
an indoor heat exchanger (120) for performing heat exchange between refrigerant introduced into the indoor exchanger (120) after emerging from the compressor (110) and air;
an outdoor heat exchanger (140) for performing heat exchange between refrigerant introduced into the outdoor heat exchanger (140) and outdoor air;
a first expansion device (130) arranged between the indoor heat exchanger (120) and the outdoor heat exchanger (140), to expand refrigerant introduced into the first expansion device (130);
an evaporator (160) for evaporating refrigerant introduced into the evaporator (160), to dehumidify indoor air;
a second expansion device (161) arranged between the outdoor heat exchanger (140) and the evaporator (160), to expand refrigerant introduced into the second expansion device (161);
a first bypass line (191) connected to guide refrigerant emerging from the indoor heat exchanger (120) to flow toward the evaporator (160) after bypassing the first expansion device (130) and the outdoor heat exchanger (140), and
a second bypass line (192) connected to guide refrigerant flowing toward the evaporator (160) to flow toward the compressor (110) after bypassing the evaporator (160);
an accumulator (170) connected to the compressor (110), the accumulator (170) receiving refrigerant; and
a supercooler (150) for performing heat exchange between refrigerant flowing between the evaporator (160) and the outdoor heat exchanger (140) and refrigerant flowing between the accumulator (170) and the compressor(110);
a first switch valve (181) for performing a switching operation to allow refrigerant flowing toward the first expansion device (130) to flow toward the first bypass line (191) in a low-temperature heating mode; and
a second switch valve (182) for performing a switching operation to allow refrigerant flowing toward the evaporator (160) to flow toward the second bypass line (192) in a non-dehumidification mode,
wherein, during a heating operation, the first bypass line (191) is selectively used in accordance with an outdoor temperature, and the second bypass line (192) is selectively used in accordance with an indoor humidity,
wherein in the low-temperature heating mode,
switching the first switch valve (181) to allow refrigerant emerging from the indoor heat exchanger (120) to flow toward the second switch valve (182) without passing through the outdoor heat exchanger (140);
switching the second switch valve (182) to allow refrigerant emerging from the first switch valve to flow toward the evaporator (160);
turning on the second expansion device (161),
wherein the refrigerant emerging from the supercooler (150) is expanded in the second expansion device (161), and is then supplied to the evaporator (160).

2. The air conditioner according to claim 1, further comprising:
a check valve (183) for preventing refrigerant flowing toward the first bypass line (191) from flowing toward the second switch valve (182) and from flowing toward the outdoor heat exchanger (140).

3. The air conditioner according to claim 2, further comprising:
an air introduction blocking member (121) for preventing air having exchanged heat with the indoor heat exchanger (120) from being introduced into a passenger compartment in the low-temperature dehumidification heating mode.

4. The air conditioner according to claim 3, further comprising:
an air line (300), through which indoor air flows;
a heater (200) arranged in the air line (300) in the vicinity of the indoor heat exchanger (120),
wherein the evaporator (160) and the indoor heat exchanger (120) are arranged at the air line (300),
wherein the evaporator (160) is arranged at an air introduction side of the air line (300),
wherein the indoor heat exchanger (120) is arranged at an air discharge side of the air line (300).

5. A method for controlling the air conditioner of the electric vehicle according to claim 4, comprising:
in a dehumidification heating mode,
switching the first switch valve (181) to allow refrigerant emerging from the indoor heat exchanger (120) to flow toward the outdoor heat exchanger (140);
switching the second switch valve (182) to allow refrigerant emerging from the outdoor heat exchanger (140) to flow toward the evaporator (160); and
turning off the first expansion device (130) while turning on the second expansion device (161).

6. The method according to claim 5, further comprising:
in the dehumidification heating mode,
opening the check valve (183) while opening the air introduction blocking member (121); and
turning off the heater (200).

7. The method according to claim 5, further comprising:
in a non-dehumidification heating mode,
switching the first switch valve (181) to allow refrigerant emerging from the indoor heat exchanger (120) to flow toward the outdoor heat exchanger (140);
switching the second switch valve (182) to allow refrigerant emerging from the outdoor heat exchanger (140) to flow toward the second bypass line (192); and
turning on the first expansion device (130) while turning off the second expansion device (161).

8. The method according to claim 7, further comprising:
in the non-dehumidification heating mode,
opening the check valve (183) while opening the air introduction blocking member (121); and
turning off the heater (200).

9. A method for controlling the air conditioner of an electric vehicle according to claim 4, comprising:
in the low-temperature heating mode,
closing the check valve (183) while opening the air introduction blocking member (121); and
turning on the heater (200).

10. A method for controlling the air conditioner of the electric vehicle according to claim 4, comprising:
in a dehumidification cooling mode,
switching the first switch valve (181) to allow refrigerant emerging from the indoor heat exchanger (120) to flow toward the outdoor heat exchanger (140);
switching the second switch valve (182) to allow refrigerant emerging from the second switch valve (182) to flow toward the evaporator (160);
opening the check valve (183) while closing the air introduction blocking member (121); and
turning off the first expansion device (130) while turning on the second expansion device (161).

11. An air conditioner according to claim 1, wherein the air conditioner has a non-dehumidification heating mode for allowing refrigerant flowing toward the evaporator (160) to flow toward the second bypass line (192), and a dehumidification heating mode for allowing refrigerant emerging from the outdoor heat exchanger (140) to flow toward the evaporator (160),
wherein the air conditioner operates in one of the dehumidification heating mode, the non-humidification heating mode, and the low-temperature heating mode.

12. The air conditioner according to claim 11, wherein the air conditioner operates in one of the operation modes in accordance with an outdoor temperature or an indoor humidity.

13. The air conditioner according to claim 12, wherein, when defrosting conditions are generated in the dehumidification heating mode, the dehumidification heating mode is switched to the low-temperature dehumidification heating mode.

## Patentansprüche

1. Klimaanlage eines Elektrofahrzeugs aufweisend:
einen Verdichter (110) zum Verdichten von Kältemittel;
einen Innenwärmetauscher (120) zum Durchführen eines Wärmetausches zwischen Kältemittel, das nach Austritt aus dem Verdichter (110) in den Innenwärmetauscher (120) eingeströmt ist, und Luft;
einen Außenwärmetauscher (140) zum Durchführen eines Wärmetausches zwischen Kältemittel, das in den Außenwärmetauscher (140) eingeströmt ist, und Außenluft;
eine zwischen dem Innenwärmetauscher (120) und dem Außenwärmetauscher (140) angeordnete erste Expansionsvorrichtung (130), um Kältemittel, das in die erste Expansionsvorrichtung (130) eingeströmt ist, zu expandieren;
einen Verdampfer (160) zum Verdampfen von in den Verdampfer (160) eingeströmtem Kältemittel, um Innenluft zu entfeuchten;
eine zwischen dem Außenwärmetauscher (140) und dem Verdampfer (160) angeordnete zweite Expansionsvorrichtung (161), um Kältemittel, das in die zweite Expansionsvorrichtung (161) eingeströmt ist, zu expandieren;
eine erste Umgehungsleitung (191), die verbunden ist, um Kältemittel, das aus dem Innenwärmetauscher (120) ausströmt, zu führen, so dass es nach Umgehen der ersten Expansionsvorrichtung (130) und des Außenwärmetauschers (140) zu dem Verdampfer (160) strömt, und
eine zweite Umgehungsleitung (192), die verbunden ist, um Kältemittel, das Richtung Verdampfer (160) strömt, zu führen, so dass es nach Umgehen des Verdampfers (160) zu dem Verdichter (110) strömt;
einen mit dem Verdichter (110) verbundenen Akkumulator (170), wobei der Akkumulator (170) Kältemittel empfängt; und
einen Superkühler (150) zum Durchführen eines Wärmetausches zwischen Kältemittel, das zwischen dem Verdampfer (160) und dem Außenwärmetauscher (140) strömt, und Kältemittel, das zwischen dem Akkumulator (170) und dem Verdichter (110) strömt;
ein erstes Schaltventil (181) zum Durchführen einer Schaltoperation, um in einem Niedertemperatur-Heizmodus Kältemittel, das Richtung erste Expansionsvorrichtung (130) strömt, zu der ersten Umgehungsleitung (191) strömen zu lassen; und
ein zweites Schaltventil (182) zum Durchführen einer Schaltoperation, um in einem Nichtentfeuchtungsmodus Kältemittel, das Richtung Verdampfer (160) strömt, zu der zweiten Umgehungsleitung (192) strömen zu lassen;
wobei während eines Heizvorgangs selektiv die erste Umgehungsleitung (191) gemäß einer Außentemperatur verwendet wird und selektiv die zweite Umgehungsleitung (192) gemäß einer Innenfeuchtigkeit verwendet wird,
wobei in dem Niedertemperatur-Heizmodus
Schalten des ersten Schaltventils (181), um aus dem Innenwärmetauscher (120) ausströmendes Kältemittel Richtung zweites Schaltventil (182) strömen zu lassen, ohne es durch den Außenwärmetauscher (140) strömen zu lassen;
Schalten des zweiten Schaltventils (182), um aus dem ersten Schaltventil ausströmendes Kältemittel Richtung Verdampfer (160) strömen zu lassen;
Aktivieren der zweiten Expansionsvorrichtung (161),
wobei das aus dem Superkühler (150) ausströmende Kältemittel in der zweiten Expansionsvorrichtung (161) expandiert wird und dann dem Verdampfer (160) zugeführt wird.

2. Klimaanlage nach Anspruch 1, ferner aufweisend:
ein Sperrventil (183), um Kältemittel, das Richtung erste Umgehungsleitung (191) strömt, daran zu hindern, zu dem zweiten Schaltventil (182) zu strömen und zu dem Außenwärmetauscher (140) zu strömen.

3. Klimaanlage nach Anspruch 2, ferner aufweisend:
ein Lufteinlassblockierungselement (121), um in dem Niedertemperatur-Entfeuchtung-Heizmodus zu verhindern, dass Luft, die Wärme mit dem Innenwärmetauscher (120) ausgetauscht hat, in einen Passagierraum strömt.

4. Klimaanlage nach Anspruch 3, ferner aufweisend:
eine Luftleitung (300), durch welche Innenluft strömt;
eine Heizung (200), die in der Luftleitung (300) in der Nähe des Innenwärmetauschers (120) angeordnet ist,
wobei der Verdampfer (160) und der Innenwärmetauscher (120) an der Luftleitung (300) angeordnet sind,
wobei der Verdampfer (160) an einer Lufteinlassseite der Luftleitung (300) angeordnet ist,
wobei der Innenwärmetauscher (120) an einer Luftauslassseite der Luftleitung (300) angeordnet ist.

5. Verfahren zur Steuerung der Klimaanlage des Elektrofahrzeugs nach Anspruch 4, aufweisend:
in einem Entfeuchtung-Heizmodus,
Schalten des ersten Schaltventils (181), um aus dem Innenwärmetauscher (120) ausströmendes Kältemittel zu dem Außenwärmetauscher (140) strömen zu lassen;
Schalten des zweiten Schaltventils (182), um aus dem Außenwärmetauscher (140) ausströmendes Kältemittel zu dem Verdampfer (160) strömen zu lassen; und
Deaktivieren der ersten Expansionsvorrichtung (130) und zugleich Aktivieren der zweiten Expansionsvorrichtung (161).

6. Verfahren nach Anspruch 5, ferner aufweisend:
in dem Entfeuchtung-Heizmodus,
Öffnen des Sperrventils (183) und zugleich Öffnen des Lufteinlassblockierungselements (121); und
Deaktivieren der Heizung (200).

7. Verfahren nach Anspruch 5, ferner aufweisend:
in einem Nichtentfeuchtung-Heizmodus,
Schalten des ersten Schaltventils (181), um aus dem Innenwärmetauscher (120) ausströmendes Kältemittel zu dem Außenwärmetauscher (140) strömen zu lassen;
Schalten des zweiten Schaltventils (182), um aus dem Außenwärmetauscher (140) ausströmendes Kältemittel zu der zweiten Umgehungsleitung (192) strömen zu lassen; und
Aktivieren der ersten Expansionsvorrichtung (130) und zugleich Deaktivieren der zweiten Expansionsvorrichtung (161).

8. Verfahren nach Anspruch 7, ferner aufweisend:
in dem Nichtentfeuchtung-Heizmodus,
Öffnen des Sperrventils (183) und zugleich Öffnen des Lufteinlassblockierungselements (121); und
Deaktivieren der Heizung (200).

9. Verfahren zur Steuerung der Klimaanlage eines Elektrofahrzeugs nach Anspruch 4, aufweisend:
in dem Niedertemperatur-Heizmodus,
Schließen des Sperrventils (183) und zugleich Öffnen des Lufteinlassblockierungselements (121); und
Aktivieren der Heizung (200).

10. Verfahren zur Steuerung der Klimaanlage des Elektrofahrzeugs nach Anspruch 4, aufweisend:
in einem Entfeuchtung-Kühlmodus,
Schalten des ersten Schaltventils (181), um aus dem Innenwärmetauscher (120) ausströmendes Kältemittel zu dem Außenwärmetauscher (140) strömen zu lassen;
Schalten des zweiten Schaltventils (182), um aus dem zweiten Schaltventil (182) ausströmendes Kältemittel zu dem Verdampfer (160) strömen zu lassen;
Öffnen des Sperrventils (183) und zugleich Schließen des Lufteinlassblockierungselements (121); und
Deaktivieren der ersten Expansionsvorrichtung (130) und zugleich Aktivieren der zweiten Expansionsvorrichtung (161).

11. Klimaanlage nach Anspruch 1, wobei die Klimaanlage einen Nichtentfeuchtung-Heizmodus hat, um Kältemittel, das Richtung Verdampfer (160) strömt, zu der zweiten Umgehungsleitung (192) strömen zu lassen, und einen Entfeuchtung-Heizmodus hat, um aus dem Außenwärmetauscher (140) strömendes Kältemittel zu dem Verdampfer (160) strömen zu lassen,
wobei die Klimaanlage in dem Entfeuchtung-Heizmodus oder dem Nichtentfeuchtung-Heizmodus oder dem Niedertemperatur-Heizmodus arbeitet.

12. Klimaanlage nach Anspruch 11, wobei die Klimaanlage je nach Außentemperatur oder Innenfeuchtigkeit in einem der Betriebsmodi arbeitet.

13. Klimaanlage nach Anspruch 12, wobei, wenn in dem Entfeuchtung-Heizmodus Entfrostungsbedingungen erzeugt werden, der Entfeuchtung-Heizmodus zu dem Niedertemperatur-Entfeuchtung-Heizmodus umgeschaltet wird.

## Revendications

1. Climatiseur d'un véhicule électrique comprenant :
un compresseur (110) pour comprimer un fluide frigorigène ;
un échangeur de chaleur intérieur (120) pour effectuer un échange de chaleur entre du fluide frigorigène introduit dans l'échangeur de chaleur intérieur (120) après sa sortie du compresseur (110) et de l'air ;
un échangeur de chaleur extérieur (140) pour effectuer un échange de chaleur entre du fluide frigorigène introduit dans l'échangeur de chaleur extérieur (140) et de l'air extérieur ;
un premier dispositif de détente (130) agencé entre l'échangeur de chaleur intérieur (120) et l'échangeur de chaleur extérieur (140), pour détendre du fluide frigorigène introduit dans le premier dispositif de détente (130) ;
un évaporateur (160) pour évaporer du fluide frigorigène introduit dans l'évaporateur (160), pour déshumidifier l'air intérieur ;
un second dispositif de détente (161) agencé entre l'échangeur de chaleur extérieur (140) et l'évaporateur (160), pour détendre du fluide frigorigène introduit dans le second dispositif de détente (161) ;
un premier conduit de dérivation (191) raccordé pour guider du fluide frigorigène sortant de l'échangeur de chaleur intérieur (120) pour qu'il s'écoule vers l'évaporateur (160) après dérivation du premier dispositif de détente (130) et de l'échangeur de chaleur extérieur (140), et
un second conduit de dérivation (192) raccordé pour guider du fluide frigorigène s'écoulant vers l'évaporateur (160) pour qu'il s'écoule vers le compresseur (110) après dérivation de l'évaporateur (160) ;
un accumulateur (170) raccordé au compresseur (110), l'accumulateur (170) recevant du fluide frigorigène ; et
un super refroidisseur (150) pour effectuer un échange de chaleur entre du fluide frigorigène s'écoulant entre l'évaporateur (160) et l'échangeur de chaleur extérieur (140) et du fluide frigorigène s'écoulant entre l'accumulateur (170) et le compresseur (110) ;
une première vanne de commutation (181) pour effectuer une opération de commutation pour permettre à du fluide frigorigène s'écoulant vers le premier dispositif de détente (130) de s'écouler vers le premier conduit de dérivation (191) dans un mode de chauffage à basse température ; et
une seconde vanne de commutation (182) pour effectuer une opération de commutation pour permettre à du fluide frigorigène s'écoulant vers l'évaporateur (160) de s'écouler vers le second conduit de dérivation (192) dans un mode sans déshumidification,
dans lequel, pendant une opération de chauffage, le premier conduit de dérivation (191) est utilisé sélectivement selon une température extérieure, et le second conduit de dérivation (192) est utilisé sélectivement selon une humidité intérieure,
dans lequel dans le mode de chauffage à basse température,
la commutation de la première vanne de commutation (181) pour permettre à du fluide frigorigène sortant de l'échangeur de chaleur intérieur (120) de s'écouler vers la seconde vanne de commutation (182) sans passer à travers l'échangeur de chaleur extérieur (140) ;
la commutation de la seconde vanne de commutation (182) pour permettre à du fluide frigorigène sortant de la première vanne de commutation de s'écouler vers l'évaporateur (160) ;
l'activation du second dispositif de détente (161),
dans lequel le fluide frigorigène sortant du super refroidisseur (150) est détendu dans le second dispositif de détente (161), puis est fourni à l'évaporateur (160).

2. Climatiseur selon la revendication 1, comprenant en outre :
une vanne anti-retour (183) pour empêcher du fluide frigorigène s'écoulant vers le premier conduit de dérivation (191) de s'écouler vers la seconde vanne de commutation (182) et de s'écouler vers l'échangeur de chaleur extérieur (140).

3. Climatiseur selon la revendication 2, comprenant en outre :
un organe de blocage d'introduction d'air (121) pour empêcher l'air ayant subi un échange de chaleur avec l'échangeur de chaleur intérieur (120) d'être introduit dans un habitacle passager dans le mode de chauffage avec déshumidification à basse température.

4. Climatiseur selon la revendication 3, comprenant en outre :
un conduit d'air (300), à travers lequel l'air intérieur s'écoule ;
un appareil de chauffage (200) agencé dans le conduit d'air (300) à proximité de l'échangeur de chaleur intérieur (120),
dans lequel l'évaporateur (160) et l'échangeur de chaleur intérieur (120) sont agencés au niveau du conduit d'air (300),
dans lequel l'évaporateur (160) est agencé d'un côté introduction d'air du conduit d'air (300),
dans lequel l'échangeur de chaleur intérieur (120) est agencé d'un côté évacuation d'air du conduit d'air (300).

5. Procédé de commande du climatiseur du véhicule électrique selon la revendication 4, comprenant :
dans un mode de chauffage avec déshumidification,
la commutation de la première vanne de commutation (181) pour permettre à du fluide frigorigène sortant de l'échangeur de chaleur intérieur (120) de s'écouler vers l'échangeur de chaleur extérieur (140) ;
la commutation de la seconde vanne de commutation (182) pour permettre à du fluide frigorigène sortant de l'échangeur de chaleur extérieur (140) de s'écouler vers l'évaporateur (160) ; et
la désactivation du premier dispositif de détente (130) tout en activant le second dispositif de détente (161).

6. Procédé selon la revendication 5, comprenant en outre :
dans le mode de chauffage avec déshumidification,
l'ouverture de la vanne anti-retour (183) tout en ouvrant l'organe de blocage d'introduction d'air (121) ; et
la désactivation de l'appareil de chauffage (200).

7. Procédé selon la revendication 5, comprenant en outre :
dans un mode de chauffage sans déshumidification,
la commutation de la première vanne de commutation (181) pour permettre à du fluide frigorigène sortant de l'échangeur de chaleur intérieur (120) de s'écouler vers l'échangeur de chaleur extérieur (140) ;
la commutation de la seconde vanne de commutation (182) pour permettre à du fluide frigorigène sortant de l'échangeur de chaleur extérieur (140) de s'écouler vers le second conduit de dérivation (192) ; et
l'activation du premier dispositif de détente (130) tout en désactivant le second dispositif de détente (161).

8. Procédé selon la revendication 7, comprenant en outre :
dans le mode de chauffage sans déshumidification,
l'ouverture de la vanne anti-retour (183) tout en ouvrant l'organe de blocage d'introduction d'air (121) ; et
la désactivation de l'appareil de chauffage (200).

9. Procédé de commande du climatiseur d'un véhicule électrique selon la revendication 4, comprenant :
dans le mode de chauffage à basse température,
la fermeture de la vanne anti-retour (183) tout en ouvrant l'organe de blocage d'introduction d'air (121) ; et
l'activation de l'appareil de chauffage (200).

10. Procédé de commande du climatiseur du véhicule électrique selon la revendication 4, comprenant :
dans un mode de refroidissement avec déshumidification,
la commutation de la première vanne de commutation (181) pour permettre à du fluide frigorigène sortant de l'échangeur de chaleur intérieur (120) de s'écouler vers l'échangeur de chaleur extérieur (140) ;
la commutation de la seconde vanne de commutation (182) pour permettre à du fluide frigorigène sortant de la seconde vanne de commutation (182) de s'écouler vers l'évaporateur (160) ;
l'ouverture de la vanne anti-retour (183) tout en fermant l'organe de blocage d'introduction d'air (121) ; et
la désactivation du premier dispositif de détente (130) tout en activant le second dispositif de détente (161).

11. Climatiseur selon la revendication 1, dans lequel le climatiseur a un mode de chauffage sans déshumidification pour permettre à du fluide frigorigène s'écoulant vers l'évaporateur (160) de s'écouler vers le second conduit de dérivation (192), et un mode de chauffage avec déshumidification pour permettre à du fluide frigorigène sortant de l'échangeur de chaleur extérieur (140) de s'écouler vers l'évaporateur (160),
dans lequel le climatiseur fonctionne dans l'un du mode de chauffage avec déshumidification, du mode de chauffage sans humidification, et du mode de chauffage à basse température.

12. Climatiseur selon la revendication 11, dans lequel le climatiseur fonctionne dans l'un des modes de fonctionnement selon une température extérieure ou une humidité intérieure.

13. Climatiseur selon la revendication 12, dans lequel, lorsque des conditions de dégivrage sont générées dans le mode de chauffage avec déshumidification, le mode de chauffage avec déshumidification est commuté au mode de chauffage avec déshumidification à basse température.
